# EUROPÄISCHE PATENTSCHRIFT

(11) **EP 0 988 104 B1**
(45) Veröffentlichungstag und Bekanntmachung des Hinweises auf die Patenterteilung: **24.07.2002**
(21) Anmeldenummer: 98933490.9
(22) Anmeldetag: 08.05.1998
(51) Int. Cl.: B01D 53/32, B01D 53/94, B01J 19/08, F01N 3/08

(54) **VERFAHREN UND VORRICHTUNG ZUR VERNICHTUNG VON OXIDISCHEN SCHADSTOFFEN IN EINEM SAUERSTOFFHALTIGEN ABGAS SOWIE DAMIT BETRIEBENER MOTOR**
METHOD AND DEVICE FOR ELIMINATING OXIDE POLLUTANTS IN AN EXHAUST GAS CONTAINING OXYGEN AND ENGINE OPERATING THEREBY
PROCEDE ET DISPOSITIF POUR ELIMINER DES POLLUANTS DE TYPE OXYDE DANS UN GAZ D'ECHAPPEMENT CONTENANT DE L'OXYGENE ET MOTEUR FONCTIONNANT DE FA ON CORRESPONDANTE

(30) Priorität: 16.05.1997 DE 19720653
(43) Veröffentlichungstag der Anmeldung: 29.03.2000
(73) Patentinhaber: SIEMENS AKTIENGESELLSCHAFT, 80333 München (DE)
(72) Erfinder: BRÖER, Stefan, D-58739 Wickede (DE); HAMMER, Thomas, D-91334 Hemhofen (DE); WITZEL, Frank, D-96215 Lichtenfels (DE)
(86) Internationale Anmeldenummer: DE9801296
(87) Internationale Veröffentlichungsnummer: WO9852679

(56) Entgegenhaltungen:
- EP-A- 0 555 746
- EP-A- 0 585 047
- WO-A-92/19361
- DE-A- 2 146 228
- DE-A- 19 510 804
- DE-A- 19 645 689
- US-A- 5 711 147
- PATENT ABSTRACTS OF JAPAN vol. 013, no. 042 (C-564), 30.Januar 1989 & JP 63 242323 A (HIROMI SUGIYAMA), 7.Oktober 1988,

## Beschreibung

Die Erfindung bezieht sich auf Verfahren zur Vernichtung von oxidischen Schadstoffen in einem sauerstoffhaltigen Abgas, insbesondere zur Abgasreinigung eines Verbrennungsmotors oder einer anderen mit fossilem Treibstoff betriebenen Maschine, wie insbesondere eines Dieselmotors gemäß dem Oberbegriff des Patentanspruchs 1. Daneben bezieht sich die Erfindung auch auf eine Vorrichtung zur Durchführung dieser Verfahren sowie auf einen mit den angegeben Verfahren und der zugehörigen Vorrichtung betriebenen Motor.

Abgase aus Verbrennungsprozessen stellen einen der Hauptemittenten von Luftschadstoffen dar. Hierzu gehören insbesondere Stickoxide, Schwefeldioxide, Kohlenwasserstoffe, Kohlenmonoxid, Ruß od. dgl.. Speziell für den mit der Luftzahl Λ = 1 laufenden Ottomotor ist der Drei-Wege-Katalysator, der wirkungsvoll Stickoxide, Kohlenwasserstoffe und Kohlenmonoxid beseitigt, Stand der Technik. Für den Dieselmotor und den Otto-Magermotor (Λ > 1) ist dieser Katalysator nur beschränkt geeignet, da lediglich die Kohlenwasserstoffe und Kehlenmonoxid weitgehend abgebaut werden, jedoch wegen des hohen Sauerstoffgehaltes im Abgas die Stickoxide nicht vermindert werden können. Bislang gibt es für diese Typen von Motoren noch keinen Katalysatortyp mit hinreichend hoher Schadstoff-Abbaurate und Lebensdauer.

Vom Stand der Technik sind verschiedene Ansätze, die Schadstoffe in den Abgasen von Diesel- oder Otto-Magermotoren zu beseitigen, bekannt. Dabei gewinnt die sog. selektive katalytische Reduktion (SCR = selective catalytic reduction) von Stickoxiden zunehmend an Bedeutung.

Für direkteinspritzende (DI) Ottomotoren, die unter Teillast mager, d.h. mit Luftüberschuß (Λ > 1), unter Vollast jedoch mit Λ = 1 betrieben werden, sind Kohlenwasserstoffe (HC = hydrocarbons) als Reduktionsmittel in Diskussion, die jedoch nach dem Stand der Technik im Überschuß zugegeben werden müssen, um eine wirkungsvolle Reduktion zu erreichen (sh. z.B. A. Fritz, V. Pitchon: "The current state of research on automotive lean NOx catalysis", Applied Catalysis B:
Environmental, Bd. 13, S. 1-25 (1997)). Grund dafür ist, daß die Kohlenwasserstoffe auch durch den im Abgas enthaltenen Sauerstoff katalytisch oxidiert werden. Dieser Prozeß wird mit steigender Temperatur wahrscheinlicher und setzt dadurch eine obere Temperaturgrenze von z.B. 550 °C für den Einsatz der HC-SCR-Katalysatoren. Die untere Grenze ist durch das Einsetzen der NO-Reduktion gegeben und liegt je nach Katalysatormaterial bei 300 °C und darüber. Ein weiteres Konzept für DI-Ottomotoren ist mit dem Begriff "NOx-Speicherkatalysator" (sh. z.B. Automotive Engineering, Bd. 105, Heft 2, S. 133-135 (1997)) verbunden. Dort erfolgt im mageren Betrieb eine Speicherung der Stickoxide, die in zyklisch auftretenden kurzen Phasen mit extrem fettem Betrieb und damit hoher Kohlenwasserstoffemission katalytisch reduziert werden. Auch nach diesem Stand der Technik werden die Kohlenwasserstoffe nicht effizient genutzt.

In Dieselfahrzeugen ist ein fetter Betrieb vom Prinzip her nicht möglich. Deshalb wird hier als Reduktionsmittel Ammoniak verwendet, welches dem SCR-Prozeß durch eine Harnstoff-Hydrolyse zur Verfügung gestellt wird (Ammoniak-SCR und Harnstoff-SCR). Dadurch vermeidet man insbesondere für den mobilen Einsatz, daß Ammoniak direkt mitgeführt werden muß. In der Praxis werden im mobilen Einsatz Reduktionsraten der Stickoxide von mehr als 70 % erreicht. Besonderheit dieses Verfahrens ist, daß Harnstoff in einem Zusatztank im Fahrzeug mitgeführt werden muß. Dieses Verfahren arbeitet im Temperaturintervall von ca. 200°C bis maximal 550°C.

Generell läßt sich also feststellen, daß sich für SCR-Verfahren Probleme in der Aufwärmphase der Motoren sowie im niedrigen Lastbereich, beispielsweise im Stadtverkehr, aber auch unter Vollastbedingungen mit Abgastemperaturen von teilweise über 600 °C ergeben.

Auch durch plasmachemische Verfahren und zugehörige Vorrichtungen, wie sie in der DE-A-42 31 581, der DE-A-44 16 676, der WO-A-97/03746 und in der US 5 476 539 A beschrieben werden, ist es möglich, die Stickoxide aus motorischen Abgasen zu vermindern. Dabei werden durch sog. nichtthermische Normaldruck-Gasentladungen in einem Plasma chemische Reaktionen initiiert, die zum Abbau der Stickoxide führen können.

Unter "nichtthermischen Normaldruck-Gasentladungen" werden allgemein solche Gasentladungen verstanden, die bei Normaldruck brennen und bei denen hochenergetische Elektronen Plasmaprozesse initiieren, ohne daß dabei das Gas wesentlich erhitzt wird. Dazu gehören dielektrisch behinderte ("stille") Entladungen, Corona-Entladungen und gepulst betriebene Glimmentladungen (sh. z.B. B.Eliasson, U.Kogelschatz: "Nonequilibrium Volume Plasma Chemical Processing", IEEE Trans. Plasma Sci. Bd. 19, Nr. 6, S. 1063-1077 (1991)). Eine Besonderheit dieser plasmachemischen Verfahren besteht darin, daß sie die Stickoxide hauptsächlich zu NO₂ und HNO₃ oxidieren und nur zu einem geringen Teil und mit vergleichsweise hohem Energieaufwand in die gewünschten Produkte N₂ und O₂ reduzieren. Auch die in US 3 983 021 A und in der EP 0 659 465 A2 vorgeschlagene Kombination von Gasentladung und Katalysator im direkten Kontakt hat bisher nicht zum Erfolg geführt. Dies liegt unter anderem daran, daß eine Reihe von Katalysatoren nicht als Dielektrikum eingesetzt werden kann, weil sie in Gegenwart bestimmter Abgaskomponenten, wie z.B. schwerer Kohlenwasserstoffe, eine schwache elektrische Leitfähigkeit ausbilden, die insbesondere den Betrieb der stillen Entladungen erschwert oder ganz verhindert. Weiterhin ist dort der Zusatz eines Reduktionsmittels nicht vorgesehen oder als für die Reinigung von Kraftfahrzeugabgasen ungeeignet sogar ausgeschlossen worden. Ein konkreter Ansatz für eine wirkungsvolle Abgasreinigung speziell bei niedrigen Abgastemperaturen ist dort nicht gegeben.

weiterhin wird in der DE 195 10 804 A ein Verfahren zur Stickoxidminderung in Abgasen von Verbrennungsmaschinen beschrieben, bei dem die Sauerstoffüberschuß aufweisenden Abgase unter Zuführung eines selektiv wirkenden gasförmigen Reduktionsmittels mit einem Katalysator in Kontakt gebracht werden: Bei der zugehörigen Vorrichtung wird das Reduktionsmittel vor Eintritt in den Kontakt am Katalysator in den Hochdruckplasmazustand unter überwiegender Radikalbildung überführt. Demgegenüber durchläuft bei der EP 0 585 047 A zur Reinigung der Abgase von Brennkraftmaschinen das Abgas zunächst eine elektrische Niedertemperaturentladung, bevor es auf einen Wandler mit einem Katalyator zur Umsetzung der Schadstoffe gelangt. Eine Reduktion ist dabei nicht angesprochen.

Daneben wird in der DE 21 26 228 A ein Verfahren und eine Vorrichtung zur Abgasreinigung in Kraftfahrzeugen beschrieben, bei dem das Abgas, bevor es durch einen katalytischen Abgasreaktor geleitet wird, zunächst einem elektrostatischen Filter zugeführt wird. Mit dem Filter sollen Schwebeteilchen im Raumladungsfeld einer Koronaentladung aufgeladen werden. Eine Gasentladung wird dabei nicht realisiert. Schließlich wird mit der JP 63-242323 A vorgeschlagen, zum Entfernen von NOₓ aus einem Abgas eine Behandlung über ein Entladungsplasma vorzunehmen, bevor das Abgas durch ein Katalysatorbett auf der Basis von Platin-Rhodium (PtRh) mit reduzierender Wirkung geführt wird.

Ausgehend vom Stand der Technik ist es Aufgabe der Erfindung, Verfahren zur Vernichtung von oxidischen Schadstoffen in einem sauerstoffhaltigen Abgas anzugeben und zugehörige Vorrichtungen zu schaffen, bei denen insbesondere die jeweiligen Nachteile der plasmachemischen Verfahren und der katalytischen Verfahren zur Abgasbehandlung vermieden werden. Vielmehr sollen die Stärken beider Verfahren genutzt werden.

Die Aufgabe ist erfindungsgemäß durch Verfahren mit den Verfahrensschritten gemäß Patentanspruch 1 gelöst. Eine erfindungsgemäße Vorrichtung ist durch den Patentanspruch 12 und in der Realisierung als Motor durch Patentanspruch 25 wiedergegeben. Vorteilhafte Weiter-bildungen der beiden alternativen Verfahren oder der zugehörigen Vorrichtung ergeben sich aus den Unteransprüchen.

Bei der Erfindung sind ein Reaktor zum Betrieb nichtthermischer Normaldruckgasentladungen, im folgenden auch kurz "Gasentladung" genannt, wie dielektrisch behinderte Entladungen, gepulste oder Gleichstrom-Corona-Entladungen, oder gepulste Glimmentladungen, und ein Katalysator in Strömungsrichtung des Abgases hintereinandergeschaltet. Im Gegensatz zur EP 0 -659 465 A2 besteht dabei kein direkter Kontakt zwischen Plasma und Katalysator. Ebenfalls im Gegensatz zu EP 0 659 465 A2 ist wegen des bevorzugten Einsatzes der Erfindung für die Reduktion von NO in oxidierender Atmosphäre, wie beispielsweise in Dieselabgas, die Zugabe eines Reduktionsmittels entweder vor der Gasentladung oder vor dem Katalysator vorgesehen. Der Einsatz der Erfindung ist dadurch jedoch nicht auf Dieselabgase eingeschränkt, sondern ermöglicht die effiziente Reduktion von oxidischen Schadstoffen, wie beispielsweise Stickstoffoxid (NO) oder Stickstoffdioxid (NO₂), d.h. allgemein Stickoxide (NOₓ), in allen oxidierenden Atmosphären.

Bei der Erfindung dient die Vorbehandlung des Abgases in der Gasentladung der "Aktivierung" für die selektive katalytische Reduktion. Letztere wird seit Jahren erfolgreich zur Rauchgasreinigung von Kraftwerken eingesetzt. Im Rahmen der Erfindung kann - induziert durch die Gasentladung - beispielsweise zunachst ein Teil des NO zu NO₂ oxidiert werden, was durch geeigneten Reaktoraufbau und Reaktorbetrieb, beispielsweise entsprechend der DE 195 25 749 A1 oder der DE 195 25 754 A1, mit niedrigem Energieaufwand möglich ist, wobei das verbleibende NO gemeinsam mit dem Stickstoffdioxid anschließend reduziert wird.

Der Erfindung lag die überraschende Erkenntnis zugrunde, daß das eigentlich unerwünschte NO-Oxidationsprodukt NO₂ in der selektiven katalytischen Reduktion nicht nur selbst sehr viel schneller und vor allem bei niedrigeren Temperaturen als NO abgebaut wird, sondern auch den Abbau von NO bei Temperaturen unterhalb der dafür sonst erforderlichen Temperaturen ermöglicht. Als Reaktionsprodukte der selektiven katalytischen Reduktion von NO und NO₂ mit NH₃ als Reduktionsmittel sind H₂O und N₂ zu erwarten. Um die gemeinsame Reduktion von NO und NO₂ zu begünstigen und die Bildung von Ammoniumnitrat, die in einer demgegenüber langsamen Reaktion von NO₂ mit NH₃ erfolgt, zu vermeiden, wird dabei der Konversionsgrad vorteilhafterweise stets unter 50 % des anfänglichen NO-Gehaltes liegen.

Der Energieaufwand für die Oxidation von NO zu NO₂ durch die Gasentladung läßt sich außer durch reaktortechnische Maßnahmen auch dadurch senken, daß im Abgas Kohlenwasserstoffe in einer Konzentration bereitgestellt werden, die in etwa der von NO entspricht. Dies kann durch Steuerung des Verbrennungsprozesses oder nachträgliche Einspritzung in das heiße Abgas geschehen. Dabei kann es sich um einen einzelnen, bevorzugt Doppelbindungen oder Sauerstoff enthaltenden Kohlenwasserstoff oder um ein Gemisch unterschiedlicher Kohlenwasserstoffe, wie Benzin oder Dieselkraftstoff, handeln.

Der durchschnittliche Energieverbrauch kann im Rahmen der Erfindung dadurch niedrig gehalten werden, daß die Gasentladung über ein Kennlinienfeld in Abhangigkeit von Motorlast und Drehzahl sowie von der Katalysatormitteltemperatur gesteuert wird. Oberhalb der Schwelltemperatur für die selektive katalytische Reduktion von NO ist kein Entladungsbetrieb erforderlich, darunter steigt der Energieeinsatz pro Masseneinheit NOₓ im Abgas mit sinkender Temperatur, da für gleichbleibenden Reduktionsgrad mehr NO zu NO₂ konvertiert werden muß.

Für den Fall, daß das Reduktionsmittel vor der Gasentladung zugesetzt wird, ist beim Betrieb der Gasentladung darauf zu achten, daß das Reduktionsmittel nicht durch die Gasentladung abgebaut, sondern nur aktiviert wird. Wenn dies sichergestellt ist, können sich im Rahmen der Erfindung Vorteile im Vergleich zu anderen Vorschlägen ergeben: Ein Oxidationskatalysator wäre zwar durchaus bei höheren Temperaturen in der Lage, NO in begrenztem Umfang zu NO₂ zu oxidieren. Dabei werden aber die in einem nachgeschalteten SCR-Katalysator erforderlichen Reduktionsmittel, wie z.B. die im Abgas enthaltenen Kohlenwasserstoffe und CO, nahezu vollständig aus dem Abgas entfernt, und der Grad der Konversion von NO zu NO₂ steigt ungünstigerweise mit zunehmender Temperatur. Speziell für die Aktivierung des Reduktionsmittels eröffnet also speziell die Gasentladung Möglichkeiten, die mit katalytischen Maßnahmen allein bisher nicht realisierbar sind.

Die Aktivierung führt also vorteilhafterweise zu einer niedrigeren Schwelltemperatur für den katalytischen Prozeß, als üblicherweise ohne Gasentladung notwendig ist. Wesentlich ist in diesem Zusammenhang, daß die Aktivierung der Schadstoffe, des Reduktionsmittels oder anderer Komponenten des Abgases in der Gasentladung in einem Temperaturbereich möglich ist, der weit über den für die selektive katalytische Reduktion hinausgeht. Das eröffnet die Möglichkeit, das Abgas vor der katalytischen Behandlung, also z.B. in der Gasentladung, abkühlen zu lassen und so den Einsatzbereich für die katalytische Reduktion zusatzlich zu erweitern. Da der Wärmeverlust bei hohen Temperaturen deutlich höher als bei niedrigen Temperaturen ist, wird heißes Abgas, das den Katalysator schädigen könnte oder in dem wegen katalytischer Oxidation des Reduktionsmittels keine Reduktion mehr möglich ist, stärker abgekühlt als solches, dessen Temperatur nur wenig über der Schwelltemperatur für den katalytischen Prozeß liegt.

Ein weiterer Vorteil der Erfindung liegt darin, daß die Eröffnung zusätzlicher Reaktionskanäle wie der oben genannten auch im Temperaturintervall normaler katalytischer Aktivität zu erhöhten Reduktionsraten führt. Diese erhöhten Reduktionsraten werden bei normaler Auslegung für maximalen Reduktionsgrad im aktiven Temperaturintervall nicht sichtbar, erlauben aber eine Verkleinerung des Katalysatorvolumens bei gleichem Abgasmassenstrom oder die Behandlung eines größeren Abgasmassenstromes bei gleichem Katalysatorvolumen.

Weitere Einzelheiten und Vorteile der Erfindung ergeben sich durch die nachfolgende Figurenbeschreibung von Beispielen anhand der Zeichnung in Verbindung mit den Patentansprüchen. Es zeigen
- FIG 1: das Verfahrensprinzip,
- FIG 2: eine Modifikation von Figur 1,
- FIG 3 und FIG 4: Möglichkeiten der Abgasaufbereitung,
- FIG 5 und FIG 6: Möglichkeiten der Reduktionsmittelaufbereitung,
- FIG 7 bis FIG 10: Darstellungen von Versuchsergebnissen zur Verdeutlichung der Erfindung sowie
- FIG 11: einen mit dem beschriebenen Verfahren betriebenen Motor.

In den Figuren haben gleiche Einheiten gleiche oder sich entsprechende Bezugszeichen. Die Figuren werden teilweise gemeinsam beschrieben.

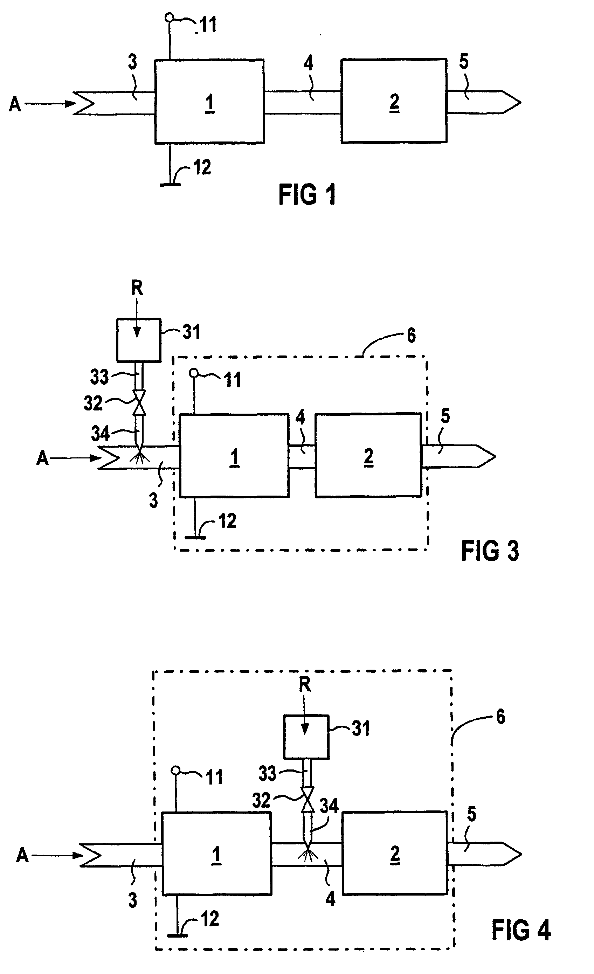

In Figur 1 ist das Verfahrensprinzip in Form einer einfachen Reihenschaltung einzelner Funktionsmodule zur Reinigung eines Abgases A dargestellt: Das Abgas A wird durch eine Zuleitung 3 in ein Modul 1 eingeleitet, das eine Gasentladungsstrecke und Anschlüsse 11 und 12 zur elektrischen Versorgung der Gasentladung enthält. Nach der Aktivierung wird das Abgas A durch eine Verbindungsleitung 4 in ein einen SCR-Katalysator enthaltendes Modul 2 weitergeleitet. Das Abgas A wird nach katalytischer Reinigung durch eine ins Freie führende Leitung 5, wie bspw. Auspuff eines Fahrzeugs, freigesetzt.

In Figur 2 ist zur Steigerung des Wirkungsgrades vorgesehen, eine Mehrzahl einzelner Module 1, 2 aus jeweils einer Gasentladungsstrecke und einer Katalysatorstrecke im Wechsel hintereinander zu schalten. Somit sind in der Reihenschaltung mehrere Einheiten 6 aus je einem Gasentladungsmodul 1 und je einem Katalysatormodul 2 mit den dafür erforderlichen Verbindungsleitungen 4 vorhanden.

In Figur 3 ist eine erste Möglichkeit der Aufbereitung des Abgases A vorgesehen: Durch dosierten Zusatz eines Reduktionsmittels R mittels eines Vorratstanks 31, eines Dosierventils 32, Zuleitungen 33 und einer geeignet ausgebildeten Sonde 34 vor dem Gasentladungsmodul 1 wird das anhand der Figuren 1 und 2 in seinem Prinzip verdeutlichte Verfahren praxisgerecht in seinem Wirkungsgrad verbessert. Die Art der Sonde 34 für die Einleitung in den Strom des Abgases A richtet sich nach der Art der Aufbereitung des Reduktionsmittels R, das flüssig oder gasförmig sein kann. Bei der Anordnung gemäß Figur 2 kann der Reduktionsmittelzusatz vor jedem Gasentladungsmodul 1 getrennt geregelt werden.

In Figur 4 ist eine alternative Möglichkeit der Abgasaufbereitung vorgesehen: Hier wird das Reduktionsmittel R zwischen dem Gasentladungsmodul 1 und dem Katalysatormodul 2 zugesetzt. Bei Realisierung als Anordnung gemäß Figur 2 mit einer Reihenschaltung einer Mehrzahl von jeweils aus Gasentladungsstrecke und Katalysatorstrecke bestehenden Einheiten kann der Reduktionsmittelzusatz in jeder Einheit 6 getrennt geregelt erfolgen.

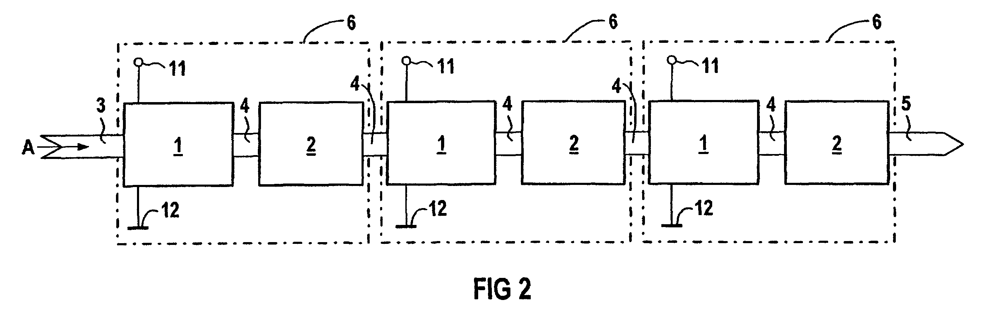

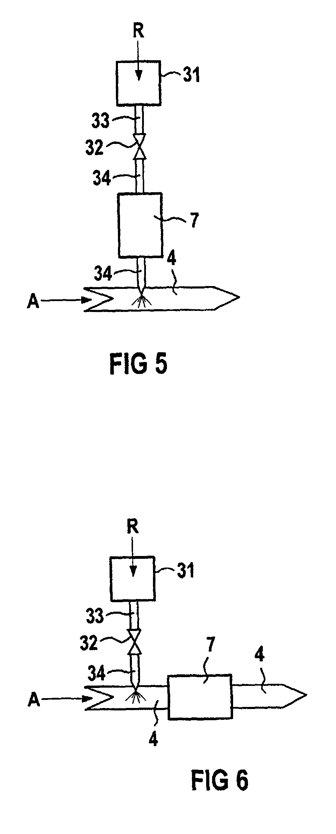

In den Figuren 5 und 6 sind Möglichkeiten der Aufbereitung des Reduktionsmittels R gezeigt, wofür jeweils ein Aufbereitungsmodul 7 vorhanden ist: Speziell in Figur 5 erfolgt die Aufbereitung in der Zuleitung 3 für das Abgas A. Das Aufbereitungsmodul 7 kann dabei eine Katalysator- oder eine Gasentladungsstrecke enthalten. In der Figur 6 erfolgt dagegen die Aufbereitung im Abgasstrang 4.

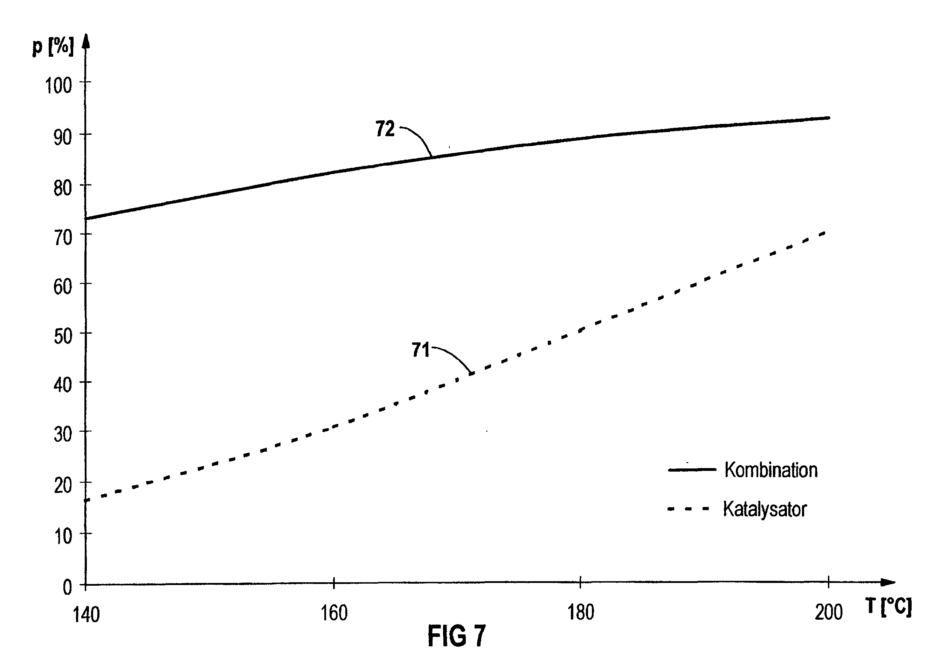

Figur 7 zeigt den NO-Reduktionsgrad p in % als Funktion der Abgastemperatur T in °C, wobei Ammoniak als Reduktionsmittel verwendet wird und eine einfache Kombination aus Gasentladungsmodul 1 und SCR-Katalysatormodul 2 gemäß Figur 1 benutzt wurde. Das als Abgas A behandelte Gasgemisch bestand aus 82% N₂, 13% O₂, 5% H₂O, 500ppm NO und 500ppm NH₃. Die Raumgeschwindigkeit im Katalysatormodul 2 betrug 11.000h⁻¹. Das Reduktionsmittel R wurde vor dem Gasentladungsmodul 1 beigemischt. Die Kurve 71 gibt das Versuchsergebnis mit einem Katalysator, die Kurve 72 das Versuchsergebnis einer Kombination von Gasentladung und Katalysator wieder.

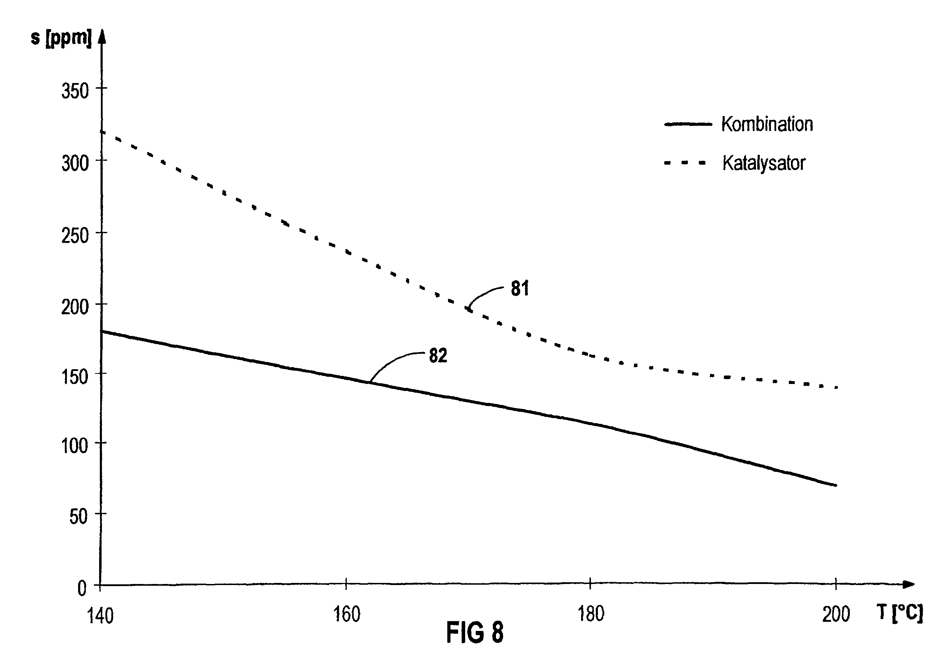

Figur 8 zeigt den bei den Prozessen gemäß Figur 7 auftretenden Ammoniakschlupf s in ppm als Funktion der Temperatur T in °C. Unter s "Schlupf" ist dabei der Anteil des nicht verbrauchten Reduktionsmittels zu verstehen, womit ein Maß für den Wirkungsgrad gegeben ist. Da die Menge des Reduktionsmittels R i.allg. dem Verbrauch angepaßt wird, ist für die Praxis ein niedriger Schlupf anzustreben. Die Kurve 81 gibt das Versuchsergebnis mit einem Katalysator, die Kurve 82 das Versuchsergebnis einer Kombination von Gasentladung und einem Katalysator wieder.

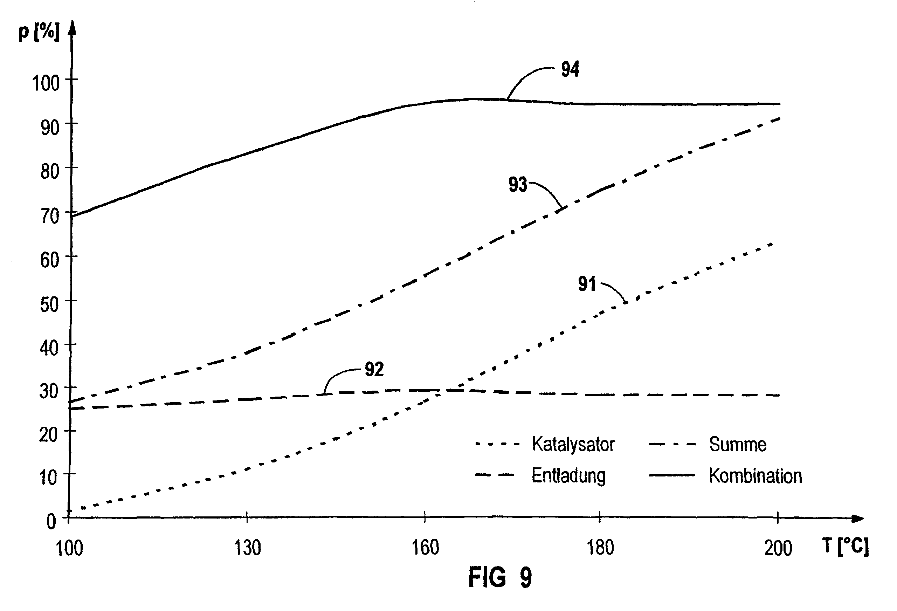

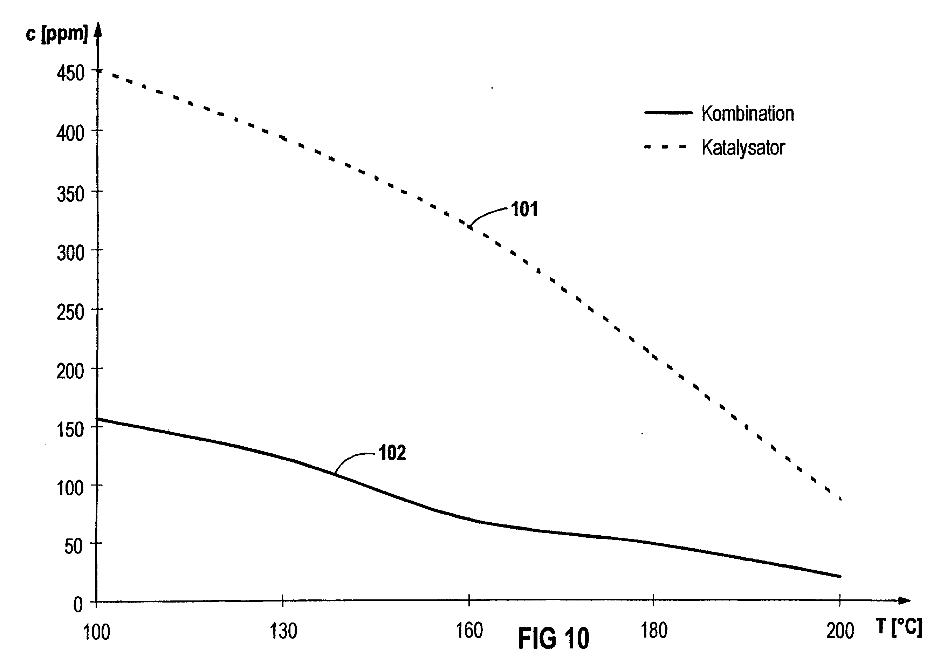

In entsprechender Weise sind in Figur 9 der NOₓ-Reduktionsgrad p und in Figur 10 die NH₃-Konzentration c in ppm als Funktion der Abgastemperatur T in °C unter den gleichen Randbedingungen wie in Figur 7, jedoch mit einem zusätzlichen Kohlenwasserstoffzusatz von 500ppm Ethen dargestellt. Hier geben die Kurven 91 und 92 die Ergebnisse mit einem Katalysator bzw. einer Entladung wieder, die Kurve 93 zeigt dagegen deren Summe und die Kurve 94 zeigt schließlich die Kombination von Gasentladung und Katalysator bei der vorgeschlagenen Betriebsweise.

Bei den anhand der Figuren 1 bis 6 beschriebenen Anordnungen kann ein Katalysator aus dem Bereich der Kraftwerksentstickung zum Einsatz kommen, der NH₃ als Reduktionsmittel nutzt. Daneben sind Katalysatoren verwendbar, die auf Basis der selektiven katalytischen Reduktion (SCR) mit beliebigen Reduktionsmitteln Stickoxide reduzieren. In fast allen Fällen wird dieser Prozeß effizienter und schon bei niedrigeren Temperaturen ablaufen, wenn das Abgas erst durch einen Energieeffizienten Gasentladungsprozeß für die katalytische Reinigung aktiviert wird.

Als Reduktionsmittel wird speziell Ammoniak (NH₃) verwendet. Gegebenenfalls sind solche Substanzen, die bisher für die NO-Reduktion nicht genutzt wurden, die sich aber für die NO₂-Reduktion oder für die NO-Reduktion in Gegenwart von NO₂ eignen, möglich. Das Reduktionsmittel R kann sowohl vor der Gasentladung als auch hinter der Gasentladung eingebracht werden. Das Einbringen vor dem Gasentladungsmodul führt neben der NO₂-Bildung zu einer Aktivierung des Reduktionsmittels durch die Gasentladung. Es ist auch möglich, das Reduktionsmittel R in einem dem Gasentladungsmodul vorgeschalteten Katalysator entweder in der Zuleitung des Reduktionsmittels oder nach Zusatz des Reduktionsmittels im Abgasstrang vorzubehandeln, wie es z.B. bei der Harnstoff-Hydrolyse erfolgt.

Die vorstehend genannten Aspekte werden durch experimentelle Ergebnisse belegt, die mit einer einfachen Reihenschaltung von dielektrisch behinderter Entladung und SCR-Katalysator durchgeführt worden sind: Bei diesen Messungen wurden ein Katalysator aus dem Bereich der Kraftwerksentstickung und Ammoniak als Reduktionsmittel verwendet.

Aufgetragen sind in den Figuren 7 bis 10 die Meßkurven des erfindungsgemäßen Verfahrens als Funktion der Temperatur T im Vergleich zu bekannten Kurven von Katalysatoren und einer separaten Normaldruckentladung. In allen Fällen ergibt sich eine deutliche Verbesserung.

Im einzelnen ergibt sich aus Figur 7 durch den Vergleich von Kurve 72 und Kurve 71, daß bei der vorgegebenen Raumgeschwindigkeit von ca. 11.000 h⁻¹ der Reduktionsgrad p der Stickoxide bei einer Temperatur T von 200°C von 70% auf 92 % und bei einer Temperatur T von 180°C von 50 % auf 88 % gesteigert wird. Selbst bei 140°C und 160°C, d.h. außerhalb des bekannten aktiven Temperaturfensters (170°C - 430°C) des Katalysators, wird durch das vorgeschaltete Gasentladungsmodul ein Reduktionsgrad p von 72 % bzw. 81 % erreicht. Bei einer Erhöhung der Temperatur auf 250°C werden bereits ohne Entladungsmodul 90 % der Stickoxide reduziert. Durch Zuschalten des Entladungsmoduls erhöht sich der Reduktionsgrad auf 95 %.

Aus Figur 8 geht hervor, daß der Ammoniakschlupf durch die Kombination von Entladungsstrecke und Katalysatorstrecke gemäß Kurve 82 gegenüber der ausschließlichen Behandlung durch den Katalysatormodul gemaß Kurve 81 deutlich verringert wird. Damit ist also eine Wirkungsgraderhöhung des SCR-Verfahrens belegt.

Durch die Beimischung des Kohlenwasserstoffs Ethen, der hinsichtlich seines plasmachemischen Verhaltens Modellcharakter für die z.B. in Dieselabgasen vorhandenen Kohlenwasserstoffe hat, zum vorhandenen Abgasgemisch kommt es zu einer weiteren Steigerung des Reduktionsgrades p bei der Kombination von Entladungsplasma und Katalysatormodul, so daß die Oxidation von NO zu NO₂ in der Gasentladung effizienter abläuft. Hierzu sind in Figur 9 die Kurve 91 für einen Katalysator und die Kurve 92 für die Zersetzungsreaktion einer Entladung dargestellt. Der Reduktionsgrad p des Katalysators steigt mit einer Arbeitstemperaturerhöhung von 100°C auf 200°C von 1 % auf 63 %. Ohne nachgeschalteten Katalysator, d.h. mit der Gasentladungsstrecke allein, ist der Reduktionsgrad p gering und liegt unabhängig von der Temperatur T bei ca. 25%.

Es zeigt sich aus Kurve 94, daß hier mit geringem Energieaufwand für die Temperaturen 100°C und 130°C der Reduktionsgrad für NO mit 1 % und 11 % für den Katalysator allein durch Kombination von Gasentladung und Katalysator auf 69 % und 83 % gesteigert werden kann. Bei den angegebenen Temperaturen T von 160°C, 180°C und 200°C ist eine Verbesserung des Reduktionsgrades p von 27 %, 47 % bzw. 63 % auf jeweils 95 % erkennbar. Dabei wird auch der Ammoniakschlupf s verringert, was sich im einzelnen aus Figur 10 ergibt. Die in Figur 10 als Ordinate dargestellte NH₃-Konzentration p in ppm entspricht dem Schlupf gemäß Figur 7, wobei die Kurve 101 die Versuchsergebnisse mit einem Katalysator und die Kurve 102 die Versuchsergebnisse einer Kombination aus Entladungsmodul und Katalysator wiedergeben.

Ebenso wie bei den Experimenten ohne den Modellkohlenwasserstoff Ethen wird auch aus Figur 10 deutlich, daß der Ammoniakschlupf s durch die Kombination von Entladung und Katalysator gemäß Kurve 102 gegenüber einer ausschließlichen Behandlung durch den Katalysator gemäß Kurve 101 wesentlich verringert wird. Auch dies zeigt die Erhöhung des Wirkungsgrades beim vorgeschlagenen Verfahren im Vergleich zum Stand der Technik.

Die bei den vorstehend beschriebenen Untersuchungen an Modellabgasen gewählten Zusammensetzungen entsprechen der Grundzusammensetzung von Dieselabgas beim Betrieb eines Dieselmotors mit mittlerer Last. Insofern lassen sich die Ergebnisse übertragen, wobei die Anwendung des beschriebenen Verfahrens und der zugehörigen Vorrichtung fur Dieselmotoren eine erhebliche Verbesserung gegenüber dem relevanten Stand der Technik ergibt. Der dafür notwendige Aufwand hält sich in Grenzen.

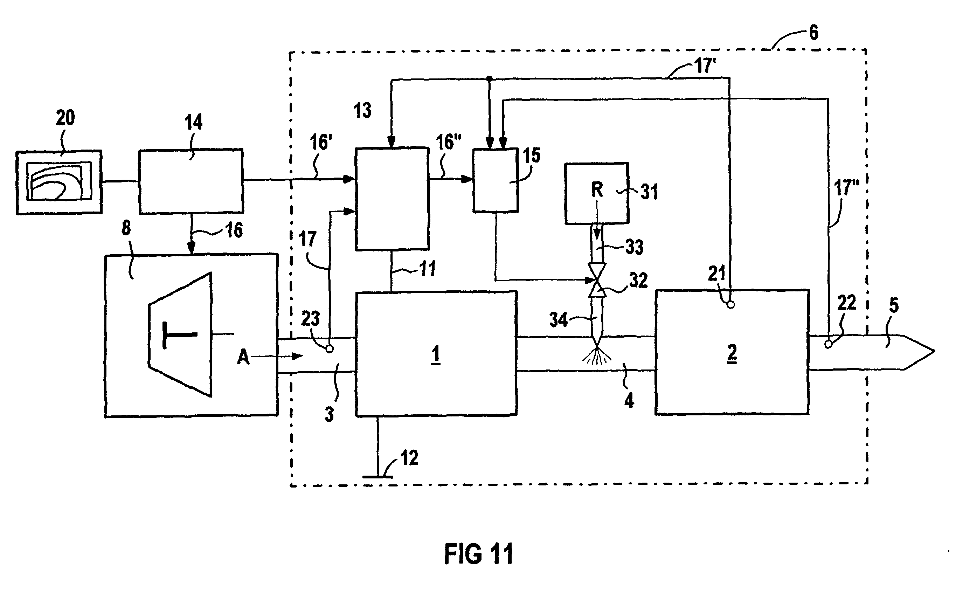

In Figur 11 ist die konkrete Realisierung des beschriebenen Verfahrens und der zugehörigen Vorrichtung speziell bei einem Dieselmotor verdeutlicht:
Einem Motor 8 mit einer Vorrichtung gemäß Figur 1 aus kombinierten Modulen 1 und 2 mit Gasentladungsstrecke einerseits und Katalysatorstrecke andererseits sind eine elektronische Regeleinheit 13 mit einem zugehörigen Netzteil zum Betrieb der Gasentladung und eine Einheit 14 zur Motorsteuerung zugeordnet. Mit 15 ist eine elektronische Steuerung der Einspritzung des Reduktionsmittels R, beispielsweise Harnstoff, und mit 16, 16' und 16'' sind Datenleitungen für digitale und/oder analoge Signale für die Regelung bezeichnet. Mit 17, 17' und 17'' sind Signalleitungen für Meßsignale bezeichnet.

Die Gasentladung im Abgas A und die Zugabe des Reduktionsmittels R werden in Abhängigkeit vom Motorzustand gesteuert. Der Motorsteuereinheit 14 ist ein permanenter Datenspeicher 20, beispielsweise ein EEPROM, vorgeschaltet, in dem bekannte Kennlinienfelder des Motors 8 abgespeichert sind. Weiterhin sind Meßmittel für charakteristische Größen vorhanden: Ein Sensor 21 für eine elektrische Temperaturmessung ist für die Steuerung erforderlich, optional sind ein Sensor 22, vorteilhafterweise ein elektrochemischer oder optischer Sensor, zur Bestimmung der Konzentration des Reduktionsmittels R und weiterhin Sensoren 23, vorteilhafterweise elektrochemische oder optische Sensoren, zur Bestimmung der Konzentration von NOₓ und HC, vorhanden.

Die Kombination der nichtthermischen Normaldruck-Gasentladung mit der selektiven katalytischen Reduktion (SCR) erweist sich also als beachtliche Verbesserung für die Praxis der Abgasreinigung, wozu zusammenfassend nochmals auf die Figur 9 hingewiesen wird: Aus der Summe der Ergebnisse für SCR ohne Plasmaaktivierung gemäß Kurve 91 und der Ergebnisse für Plasmabehandlung allein gemäß Kurve 92 folgt zwingend, daß der in Kombination erzielte Behandlungserfolg entsprechend Kurve 94 nicht auf die einfache additive Überlagerung zweier NO-Abbaumaßnahmen entsprechend Kurve 93 zurückzuführen ist. Tatsächlich führt erst der vorstehend im einzelnen beschriebene Prozeß mit einer räumlich und zeitlich getrennt erfolgenden Plasmaaktivierung zu einer Verstärkung des katalytischen Abbaus.

## Patentansprüche

1. Verfahren zur Vernichtung von oxidischen Schadstoffen in einem sauerstoffhaltigen Abgas, insbesondere zur Abgasreinigung eines Verbrennungsmotors oder einer anderen, mit fossilem Treibstoff betriebenen Maschine, wie insbesondere eines Dieselmotors, wobei das Abgas (A) zunächst in einer nichtthermischen Normaldruck-Gasentladung vorbehandelt wird, und wobei anschließend eine selektive katalytische Reduktion (SCR) der oxidischen Schadstoffe unter Zugabe eines Reduktionsmittels (R) erfolgt, **dadurch gekennzeichnet, daß** zur Anwendung beim Abbau von Stickoxiden (NOₓ) zunächst durch die Gasentladung Stickstoffmonoxid (NO) zu Stickstoffdioxid (NO₂) oxidiert wird, wobei der Grad der Oxidation von Stickstoffmonoxid (NO) zu Stickstoffdioxid (NO₂) unter 50 % gehalten wird, und daß bei der anschließenden selektiven katalytischen Reduktion (SCR) Ammoniak (NH₃) als Reduktionsmittel verwendet wird, so daß als Reaktionsprodukte Wasser (H₂O) und Stickstoff (N₂) entstehen.

2. Verfahren nach Anspruch 1, **dadurch gekennzeichnet, daß** die nichtthermische Normaldruck-Gasentladung eine dielektrisch behinderte Entladung ist.

3. Verfahren nach Anspruch 1, **dadurch gekennzeichnet, daß** die nichtthermische Normaldruck-Gasentladung eine Corona-Entladung, insbesondere gepulste oder Gleichstrom-Corona-Entladung, ist.

4. Verfahren nach Anspruch 1, **dadurch gekennzeichnet, daß** die nichtthermische Normaldruck-Gasentladung eine gepulst betriebene Glimmentladung ist.

5. Verfahren nach Anspruch 1, **dadurch gekennzeichnet, daß** der Energieaufwand für die Oxidation von Stickstoffmonoxid (NO) in der Gasentladung durch im Abgas vorhandene oder dem Abgas zugesetzte Kohlenwasserstoffe gegenüber einer Oxidation ohne Zusätze gesenkt wird.

6. Verfahren nach Anspruch 5, **dadurch gekennzeichnet, daß** der Grad der Oxidation von Sticstoffmonoxid (NO) zu Stickstoffdioxid (NO₂) über die der Gasentladung zur Verfügung gestellte Leistung in Abhängigkeit der Abgasparameter NOₓ-Massentrom und HC-Massenstrom sowie der Katalysatormitteltemperatur geregelt wird.

7. Verfahren nach Anspruch 6, **dadurch gekennzeichnet, daß** im Falle von Motoren die Abgasparameter anhand des Kennlinienfeldes ermittelt werden.

8. Verfahren nach einem der vorhergehenden Ansprüche,
**dadurch gekennzeichnet, daß** die Abgasbehandlung bei Temperaturen gestartet wird, die unterhalb der Einsatztemperaturen von katalytischen Prozessen ohne Plasmavorbehandlung liegen.

9. Verfahren nach Anspruch 8, **dadurch gekennzeichnet, daß** der Betrieb der Gasentladung bei Temperaturen eingestellt wird, die oberhalb der Schwelltemperatur für die zu nutzenden katalytischen Prozesse ohne Plasmavorbehandlung liegen.

10. Verfahren nach Anspruch 8, **dadurch gekennzeichnet, daß** das Katalysatorvolumen gegenüber der Auslegung im Betrieb ohne Plasmavorbehandlung reduziert und die Gasentladung auch bei Temperaturen betrieben wird, die oberhalb der Schwelltemperatur für die zu nutzenden katalytischen Prozesse ohne Plasmavorbehandlung liegen.

11. Verfahren nach Anspruch 8, dadarch gekennzeichnet, daß der Wirkungsbereich der Abgasreinigung durch Kühlung vom Abgas (A) erweitert wird, dessen Temperatur oberhalb der Maximaltemperatur für die zu nutzenden katalytischen Prozesse liegt.

12. Vorrichtung zur Durchführung des Verfahrens gemäß einem der Ansprüche 1 bis 11, mit einer Reihenschaltung wenigstens eines Moduls (1) mit einer nicht thermischen Normaldruck-Gasentladungsstrecke und wenigstens eines Moduls (2) mit einer Katalysatorstrecke, wobei zum Halten des Oxidationsgrades von NO zu NO₂ auf unter 50 % Mittel zur Regelung der Gasentlandungsleistung in Abhängigkeit vom NOₓ- und vom HC-Massenstrom im Abgas und von der Katalysatormitteltemperatur vorhanden sind.

13. Vorrichtung nach Anspruch 12, **dadurch gekennzeichnet, daß** mehrere Einheiten (6) mit Modulen (1,2;1,2;...) aus jeweils einer Entladungs- oder Katalysatorstrecke im Wechsel hintereinander angeordnet sind.

14. Vorrichtung nach einem der Ansprüche 12 oder 13, zur Durchführung des Verfahrens nach einem der Ansprüche 1 bis 11, **dadurch gekennzeichnet, daß** das Reduktionsmittel (R) dem Abgas (A) an der Stelle zugeführt wird, an der die reduzierende Wirkung maximal und der Schlupf (s) des unverbrauchten Reduktionsmittels (R) minimal ist.

15. Vorrichtung nach Anspruch 14, **dadurch gekennzeichnet, daß** das Reduktionsmittel (R ) zumindest vor der ersten nichtthermischen Normaldruck-Gasentladungsstrecke (1) dem Abgas (A) zugefügt wird, so daß es durch die Gasentladung aktiviert wird.

16. Vorrichtung nach Anspruch 14, **dadurch gekennzeichnet, daß** das Reduktionsmittel (R) nach der nichtthermischen Normaldruck-Gasentladungsstrecke (1) hinzugefügt wird, falls die Aktivierung durch die Gasentladung keinen Nutzen bringt.

17. Vorrichtung nach Anspruch 14, **dadurch gekennzeichnet, daß** ein weiterer Katalysator (7) vorhanden ist, der zur Vorbehandlung des Reduktionsmittels (R) entweder in der Zuleitung (3) oder in der Abgasleitung (4) vor und/oder hinter der nichtthermischen Normaldruck-Gasentladungsstrecke (1) angeordnet ist.

18. Vorrichtung nach einem der Ansprüche 12 bis 17, **dadurch gekennzeichnet, daß** Mittel zur Regelung des Schlupfs unverbrauchter Reduktionsmittel vorhanden sind.

19. Vorrichtung nach Anspruch 18, **dadurch gekennzeichnet, daß** die Konzentration der Reduktionsmittel am Ausgang der Abgasreinigungsanlage mit optischen oder elektrochemischen Sensoren gemessen wird.

20. Vorrichtung nach einem der Ansprüche 12 bis 19, **dadurch gekennzeichnet, daß** Mittel zur Regelung der Zugabe des Reduktionsmittels in Abhangigkeit vom NOₓ- und vom HC-Massenstrom im Abgas, von der Katalysatormitteltemperatur und von der Gasentladungsleistung vorhanden sind.

21. Vorrichtung nach Anspruch 20, **dadurch gekennzeichnet, daß** die Informationen über den NOₓ- und den HC-Massenstrom einem Kennlinienfeld des Motors entnommen und von der Motorsteuerung zur Verfügung gestellt werden.

22. Vorrichtung nach Anspruch 20, **dadurch gekennzeichnet, daß** zur Bestimmung des NOx- und des HC-Massenstroms NOx- und HC-Konzentrationen mit optischen oder elektrochemischen Sensoren gemessen und zusammen mit Informationen über den Abgasmassenstrom weiterverarbeitet werden, die dem Kennlinienfeld des Motors entnommen und von der Motorsteuerung zur Verfügung gestellt werden.

23. Vorrichtung nach Anspruch 20, **dadurch gekennzeichnet, daß** die Katalysatormitteltemperatur elektrisch gemessen wird.

24. Motor, insbesondere Dieselmotor, mit einer Vorrichtung nach einem der Ansprüche 12 bis 23, die nach dem Verfahren gemäß den Ansprüchen 1 bis 11 arbeitet, und mit einer Einheit zur Motorsteuerung, **dadurch gekennzeichnet, daß** der Einheit (14) zur Motorsteuerung eine Einheit (13) zur Regelung der Gasentladung und ggfs. eine Einheit (15) zur Steuerung der Zufuhr des Reduktionsmittels (R) zugeordnet ist.

## Claims

1. A process for removing oxidic noxious substances in an oxygen-containing exhaust gas, in particular for the treatment of exhaust gas from an internal combustion engine or another machine operated with fossil fuel such as, in particular a diesel engine, wherein the exhaust gas (A) is first pretreated in a non-thermal normal pressure gas discharge and wherein subsequent selective catalytic reduction (SCR) of the oxidic noxious substances takes place with the addition of a reducing agent (R), **characterised in that** for application during the decomposition of nitrogen oxides (NOx), nitrogen monoxide (NO) is first oxidised to nitrogen dioxide (NO₂) by the gas discharge, wherein the degree of oxidation of nitrogen monoxide (NO) to nitrogen dioxide (NO₂) is kept below 50% and that ammonia (NH₃) is used as the reducing agent during subsequent selective catalytic reduction (SCR) so that water (H₂O) and nitrogen (N₂) are produced as reaction products.

2. A process according to Claim 1, **characterised in that** the non-thermal normal pressure gas discharge is a dielectrically impeded discharge.

3. A process according to Claim 1, **characterised in that** the non-thermal normal pressure gas discharge is a corona discharge, in particular a pulsed or direct current corona discharge.

4. A process according to Claim 1, **characterised in that** the non-thermal normal pressure gas discharge is a pulse-operated glow discharge.

5. A process according to Claim 1, **characterised in that** the energy requirement for oxidation of nitrogen monoxide (NO) in the gas discharge is lowered by hydrocarbons present in the exhaust gas or added to the exhaust gas, as compared with oxidation with additives.

6. A process according to Claim 5, **characterised in that** the degree of oxidation of nitrogen monoxide (NO) to nitrogen dioxide (NO₂) is controlled via the power provided to the gas discharge, depending on the exhaust gas parameters NOx mass-flow and HC mass-flow and on the mean temperature of the catalytic converter.

7. A process according to Claim 6, **characterised in that** in the case of engines, the exhaust gas parameters are determined by referring to the characteristics fields.

8. A process according to one of the preceding Claims, **characterised in that** exhaust gas treatment is started at temperatures which are below the initiation temperatures for catalytic processes without plasma pretreatment.

9. A process according to Claim 8, **characterised in that** the gas discharge is operated at temperatures which are above the threshold temperature for the catalytic processes being used, without plasma pretreatment.

10. A process according to Claim 8, **characterised in that** the catalyst volume is reduced as compared with the same design without plasma pretreatment and the gas discharge is also operated at temperatures which are above the threshold temperature for the catalytic processes being used, without plasma pretreatment.

11. A process according to Claim 8, **characterised in that** the range of action of exhaust gas treatment is extended by cooling exhaust gas (A) where the temperature of the exhaust gas is above the maximum temperature for the catalytic processes being used.

12. A device for performing the process according to Claims 1 to 11 with a series circuit consisting of at least one module (1) with a non-thermal normal pressure gas discharge section and at least one module (2) with a catalytic converter section, wherein, in order to keep the degree of oxidation of NO to NO₂ to less than 50%, means to control the gas discharge power, depending on the NOx mass-flow and HC-mass-flow in the exhaust gas and on the mean temperature of the catalytic converter, are present.

13. A device according to Claim 12, **characterised in that** several units (6) with modules (1,2;1,2;...), each consisting of a discharge section or a catalytic converter section, are arranged alternately in sequence.

14. A device according to one of Claims 12 or 13 for performing the process according to one of Claims 1 to 11, **characterised in that** the reducing agent (R) is supplied to the exhaust gas (A) at the point where the reducing effect is at a maximum and the slippage (s) of unconsumed reducing agent (R) is at a minimum.

15. A device according to Claim 14, **characterised in that** the reducing agent (R) is added to the exhaust gas upstream of the first non-thermal normal pressure gas discharge section (1) so that it is activated by the gas discharge.

16. A device according to Claim 14, **characterised in that** the reducing agent (R) is introduced downstream of the non-thermal normal pressure gas discharge section (1) in the event that activation by the gas discharge would provide no benefit.

17. A device according to Claim 14, **characterised in that** a further catalytic converter (7) is present, which is located either in pipe (3) or in the exhaust gas pipe (4) upstream and/or downstream of the non-thermal normal pressure gas discharge section (1), in order to pretreat the reducing agent (R).

18. A device according to one of Claims 12 to 17, **characterised in that** means to control the slippage of unconsumed reducing agent are present.

19. A device according to Claim 18, **characterised in that** the concentration of reducing agent at the exit from the exhaust gas treatment unit is measured with optical or electrochemical sensors.

20. A device according to one of Claims 12 to 19, **characterised in that** means to control the addition of reducing agent, depending on the NOx mass-flow and the HC mass-flow in the exhaust gas, on the mean temperature of the catalytic converter and on the gas discharge power, are present.

21. A device according to Claim 20, **characterised in that** the information about NOx mass-flow and HC mass-flow is abstracted from characteristics fields for the engine and provided by the engine control system.

22. A device according to Claim 20, **characterised in that** NOx and HC concentrations are measured with optical or electrochemical sensors and are further processed, together with information about the exhaust gas mass-flow, which is abstracted from the characteristics fields for the engine and provided by the engine control system, in order to determine the NOx and HC mass-flows.

23. A device according to Claim 20, **characterised in that** the mean temperature of the catalytic converter is measured electrically.

24. An engine, in particular a diesel engine, with a device according to one of Claims 12 to 23 which operates according to the process in accordance with Claims 1 to 11 and with a unit for engine control, **characterised in that** the unit (14) for engine control, is allocated a unit (13) for controlling the gas discharge and optionally a unit (15) for controlling the supply of reducing agent (R).

## Revendications

1. Procédé de destruction d'oxydes polluants de gaz d'échappement contenant de l'oxygène, notamment d'épuration des gaz d'échappement d'un moteur à combustion interne ou d'une autre machine alimentée en carburant fossile comme, notamment, un moteur diesel, les gaz (A) d'échappement étant prétraités d'abord dans une décharge dans les gaz sous pression normale, qui n'est pas thermique, et ensuite une réduction catalytique sélective (RCS) des oxydes polluants s'effectue avec addition d'un agent (R) réducteur, **caractérisé en ce que**, pour l'utilisation lors de la décomposition d'oxydes d'azote (NOₓ) on oxyde d'abord par la décharge dans les gaz du monoxyde d'azote (NO) en dioxyde d'azote (NO₂), le degré d'oxydation du monoxyde d'azote (NO) en dioxyde d'azote (NOₓ) étant maintenu en-dessous de 50 % et **en ce que**, pour la réduction catalytique sélective (RCS) qui vient ensuite, on utilise de l'ammoniac (NH₃) comme agent réducteur, de manière à former comme produit de réaction de l'eau (H₂O) et de l'azote (N₂).

2. Procédé suivant la revendication 1, **caractérisé en ce que** la décharge dans les gaz sous pression normale, qui n'est pas thermique, est une décharge rendue incomplète par voie diélectrique.

3. Procédé suivant la revendication 1, **caractérisé en ce que** la décharge dans les gaz sous pression normale, qui n'est pas thermique, est une décharge par effet couronne, notamment une décharge par effet couronne pulsée ou en courant continu.

4. Procédé suivant la revendication 1, **caractérisé en ce que** la décharge dans les gaz sous pression normale, qui n'est pas thermique, est une décharge à lueur pulsée.

5. Procédé suivant la revendication 1, **caractérisé en ce que** la dépense d'énergie pour l'oxydation du monoxyde d'azote (NO) pour la décharge dans les gaz et abaissée par des hydrocarbures présents dans les gaz d'échappement ou ajoutés aux gaz d'échappement par rapport à une oxydation sans additif.

6. Procédé suivant la revendication 5, **caractérisé en ce que** l'on règle le degré d'oxydation du monoxyde d'azote (NO) en dioxyde d'azote (NO₂) par la puissance mise à disposition dans la décharge dans les gaz en fonction des paramètres des gaz d'échappement courant massique de NOₓ et courant massique de HC ainsi que de la température moyenne du pot catalytique.

7. Procédé suivant la revendication 6, **caractérisé en ce que** l'on détermine dans le cas de moteurs les paramètres des gaz d'échappement au moyen d'une famille de courbes caractéristiques.

8. Procédé suivant l'une des revendications précédentes, **caractérisé en ce que** l'on fait débuter le traitement des gaz d'échappement à des températures qui sont inférieures aux températures de mise en oeuvre de processus catalytiques sans prétraitement au plasma.

9. Procédé suivant la revendication 8, **caractérisé en ce que** l'on règle le fonctionnement de la décharge dans les gaz à des températures qui sont supérieures à la température de seuil pour les processus catalytiques à utiliser sans prétraitement au plasma.

10. Procédé suivant la revendication 8, **caractérisé en ce que** l'on réduit le volume du pot catalytique par rapport à la conception en fonctionnement sans prétraitement au plasma et on fait fonctionner la décharge dans les gaz également à des températures qui sont supérieures à la température de seuil pour les processus catalytiques à utiliser sans prétraitement au plasma.

11. Procédé suivant la revendication 8, **caractérisé en ce que** l'on élargit le domaine d'action de l'épuration des gaz d'échappement par refroidissement des gaz d'échappement (A) dont la température est supérieure à la température maximum pour les processus catalytiques à utiliser.

12. Dispositif pour la mise en oeuvre du procédé suivant l'une des revendications 1 à 11, comprenant un circuit série d'au moins un module (1) et d'une zone de décharge dans des gaz sous pression normale, qui n'est pas thermique, et d'au moins un module (2) ayant une zone de pot catalytique, dans lequel, pour maintenir le degré d'oxydation de NO en NO₂ à une valeur inférieure à 50 % il est prévu des moyens de régulation de la puissance de décharge dans les gaz en fonction du courant massique de NOₓ et du courant massique de HC dans les gaz d'échappement et de la température moyenne du pot catalytique.

13. Dispositif suivant la revendication 12, **caractérisé en ce que** plusieurs unités (6) ayant des modules (1,2 ; 1,2 ; ...) constituées respectivement d'une zone de décharge ou d'une zone de pot catalytique, sont montées les unes derrière les autres en alternance.

14. Dispositif suivant l'une des revendications 12 ou 13, pour la mise en oeuvre du procédé suivant l'une des revendications 1 à 11, **caractérisé en ce que** l'agent (R) de réduction est apporté aux gaz d'échappement (A) au point où l'effet réducteur est maximum et où l'excès (s) de l'agent (R) réducteur non consommé est minimum.

15. Dispositif suivant la revendication 14, **caractérisé en ce que** l'agent (R) réducteur est ajouté aux gaz d'échappement (A) au moins avant la première zone (1) de décharge dans les gaz sous pression normale, qui n'est pas thermique, de manière à être activé par la décharge dans les gaz.

16. Dispositif suivant la revendication 14, **caractérisé en ce que** l'agent (R) réducteur est ajouté après la zone (1) de décharge sous pression normale, qui n'est pas thermique, dans le cas où l'activation par la décharge dans les gaz n'est pas utile.

17. Dispositif suivant la revendication 14, **caractérisé en ce qu'**il est prévu un autre pot (7) catalytique qui est monté pour le prétraitement de l'agent réducteur (R) soit dans le conduit (3) d'entrée, soit dans le conduit (4) pour les gaz d'échappement en amont et/ou en aval de la zone (1) de décharge dans les gaz sous pression normale, qui n'es pas thermique.

18. Dispositif suivant l'une des revendication 12 à 17, **caractérisé en ce qu'**il est prévu des moyens de réglage de l'excès de l'agent réducteur non consommé.

19. Dispositif suivant la revendication 18, **caractérisé en ce que** la concentration de l'agent réducteur est mesurée à la sortie de l'installation d'épuration des gaz par des capteurs optiques ou électrochimiques.

20. Dispositif suivant l'une des revendications 12 à 19, **caractérisé en ce qu'**il est prévu des moyens de régulation de l'addition de l'agent réducteur en fonction du courant massique de NOₓ et du courant massique de HC dans les gaz d'échappement, de la température moyenne du catalyseur et de la puissance de la décharge dans les gaz.

21. Dispositif suivant la revendication 20, **caractérisé en ce que** les informations sur le courant massique de NOₓ et le courant massique de HC sont prises dans un champ de courbes caractéristiques du moteur et sont mises à disposition de la commande du moteur.

22. Dispositif suivant la revendication 20, **caractérisé en ce que**, pour la détermination du courant massique de NOₓ et du courant massique de HC on mesure des concentrations de NOₓ et des concentrations de HC par des capteurs optiques ou électrochimiques et on les retraite ensemble avec des informations sur le courant massique des gaz d'échappement qui sont prises dans les familles de courbes caractéristiques du moteur et qui sont mises à disposition de la commande du moteur.

23. Dispositif suivant la revendication 20, **caractérisé en ce que** la température moyenne du pot catalytique est mesurée électriquement.

24. Moteur, notamment moteur diesel ayant un dispositif suivant l'une des revendications 12 à 23, qui opère suivant le procédé suivant les revendications 1 à 11, et comprenant une unité de commande du moteur, **caractérisé en ce qu'**il est associé à l'unité (14) de commande du moteur une unité (13) de régulation de la décharge dans les gaz et le cas échéant une unité (15) de commande de l'apport de l'agent réducteur (R).
